# EUROPÄISCHE PATENTSCHRIFT

(11) **EP 1 630 038 B1**
(45) Veröffentlichungstag und Bekanntmachung des Hinweises auf die Patenterteilung: **18.03.2009**
(21) Anmeldenummer: 05018365.6
(22) Anmeldetag: 24.08.2005
(51) Int. Cl.: H03K 17/968, B60Q 1/00

(54) **Lichtdrehschalter für Kraftfahrzeuge**
Rotary light switch for vehicles
Interrupteur rotatif d'éclairage pour véhicules

(30) Priorität: 26.08.2004 DE 102004041376
(43) Veröffentlichungstag der Anmeldung: 01.03.2006
(73) Patentinhaber: TRW Automotive Electronics & Components GmbH & Co. KG, 78315 Radolfzell (DE)
(72) Erfinder: Altmann, Markus, 78345 Moos-Bankholzen (DE); Schostok, Christoph, 78256 Steisslingen (DE); Seiler, Stefan, 78315 Radolfzell (DE); Rimmele, Matthias, 78224 Singen (DE)
(74) Vertreter: Prinz & Partner

(56) Entgegenhaltungen:
- EP-A- 0 342 031
- DE-A1- 10 137 883
- DE-A1- 19 906 035
- US-A- 5 773 935
- US-B1- 6 288 492

## Beschreibung

Die Erfindung betrifft einen Lichtdrehschalter für Kraftfahrzeuge, mit einer um eine Achse drehbaren und axial verschiebbaren Schaltwelle.

Lichtdrehschalter in Kraftfahrzeugen sind weit verbreitet. Die Schaltwelle ist in der Regel mit einem Drehknopf gekoppelt, der in verschiedenen Drehstellungen einrastet und zusätzlich in bestimmten Drehstellungen durch Ausübung von Zug axial verschiebbar ist. Den verschiedenen Schaltpositionen des Lichtdrehschalters - Kombinationen von Drehwinkel und Axialposition - entsprechen Schaltzustände von elektrischen Schaltern, die letztlich die Aktivierung der Beleuchtungsanlage des Fahrzeugs bestimmen: Parklicht, Standlicht, Scheinwerfer, Nebelscheinwerfer und Nebelschlussleuchte.

DE 199 06 035 A1 offenbart einen Lichtdrehschalter für Kraftfahrzeuge mit einem Drehstellungsmelder und einem Axialpositionsmelder. Der Drehstellungsmelder ist durch Mikroschalter sowie eine mit diesen Mikroschaltern zusammenwirkende Profilscheibe gebildet. Der Axialpositionsmelder umfaßt Mikroschalter, die durch Ausnehmungen und Vorsprünge an der Oberfläche der Drehschalterachse betätigt werden.

Bei der manuellen Betätigung des Lichtdrehschalters durch den Fahrzeuglenker ist eine konsistente Haptik von Bedeutung. Diese wird aber durch mechanische Faktoren bestimmt, die mechanischen Schaltern und Schaltkontakten anhaften, die direkt manuell über den Betätiger gesteuert werden. Änderungen dieser mechanischen Faktoren - und folglich der Haptik - durch Temperatureinflüsse und Alterung sind unvermeidlich.

Durch die Erfindung wird ein Lichtdrehschalter für Kraftfahrzeuge geschaffen, der eine von mechanischen Einflüssen freie Haptik gewährleistet. Der erfindungsgemäße Lichtdrehschalter hat eine um eine Achse drehbare und axial verschiebbare Schaltwelle, die drehfest mit einem Drehstellungsmelder sowie axial mit einem Axialpositionsmelder gekoppelt ist. Ferner hat er eine elektronische Auswerteschaltung, der die Signale vom Drehstellungsmelder und vom Axialpositionsmelder zugeführt werden und die nach einer fest eingespeicherten Entscheidungsmatrix aus den Signalen diskrete Schalterzustände ableitet, die in Schaltsignale zur Ansteuerung der Beleuchtungsanlage des Kraftfahrzeugs umgesetzt werden.

Der Drehstellungsmelder ist durch ein Potentiometer gebildet , das der Drehbewegung einen vernachlässigbaren Widerstand entgegensetzt, so dass von dem Drehstellungsmelder keine mechanischen Einflüsse ausgehen. Der Axialpositionsmelder ist durch ein Lichtschrankensystem verwirklicht , von dem ebenfalls keinerlei mechanische Rückwirkungen ausgehen. Die Haptik des Lichtdrehschalters ist daher weitgehend konsistent.

Die erfindungsgemäß vorgesehene Entscheidungsmatrix führt eine Redundanz ein, die bei theoretisch möglichen Fehlfunktionen sichere Default-Schaltfunktionen gewährleistet und unsichere Schaltfunktionen ausschließt. So sind bei bevorzugten Ausführungsformen der Erfindung bestimmte Kombinationen von Signalen des Drehstellungsmelders und des Axialpositionsmelders in der Entscheidungsmatrix als Fehler markiert. Ferner sind bestimmte Kombinationen von Signalen des Drehstellungsmelders und des Axialpositionsmelders in der Entscheidungsmatrix als Default-Schalterzustand markiert. Weiterhin sind bestimmte Kombinationen von Signalen des Drehstellungsmelders und des Axialpositionsmelders in der Entscheidungsmatrix als unveränderter Schalterzustand markiert. Schließlich sind bestimmte Signalbereiche des Axialpositionsmelders in der Entscheidungsmatrix als undefinierte Übergangsbereiche markiert. Durch diese Maßnahmen wird im Ergebnis ein fehlerhafter Zustand der Beleuchtungsanlage des Fahrzeugs sicher vermieden.

Weitere Vorteile und Merkmale der Erfindung ergeben sich aus der nachfolgenden Beschreibung unter Bezugnahme auf die beigefügten Zeichnungen. In den Zeichnungen zeigen:
Fig. 1 eine Perspektivansicht einer Grundplatte mit Leiterplatte und Betätigungsmechanismus eines Lichtdrehschalters;
Fig. 1a eine Explosionsansicht wesentlicher Funktionsteile des Lichtdrehschalters mit Drehknopf;
Fig. 1b eine Perspektivansicht einer Führungshülse;
Fig. 2 eine Teilansicht der Leiterplatte mit einem darauf angeordneten Lichtschrankensystem;
Fig. 3 eine Seitenansicht eines Lichtschrankenunterbrechers des Lichtschrankensystems;
Fig. 3a eine Seitenansicht eines alternativen Ausführung des Lichtschrankenunterbrechers;
Fig. 4 eine graphische Darstellung verschiedener Schalterzustände in Abhängigkeit von Drehposition und Axialstellung;
Fig. 5 eine Entscheidungsmatrix der Schalterzustände;
Fig. 6 eine Tabelle der Schalterstellungen in Abhängigkeit von den Zuständen des Lichtschrankensystems;
Fig. 7 bis 10 die in Fig. 1a gezeigten Funktionsteile in verschiedenen Axialstellungen.

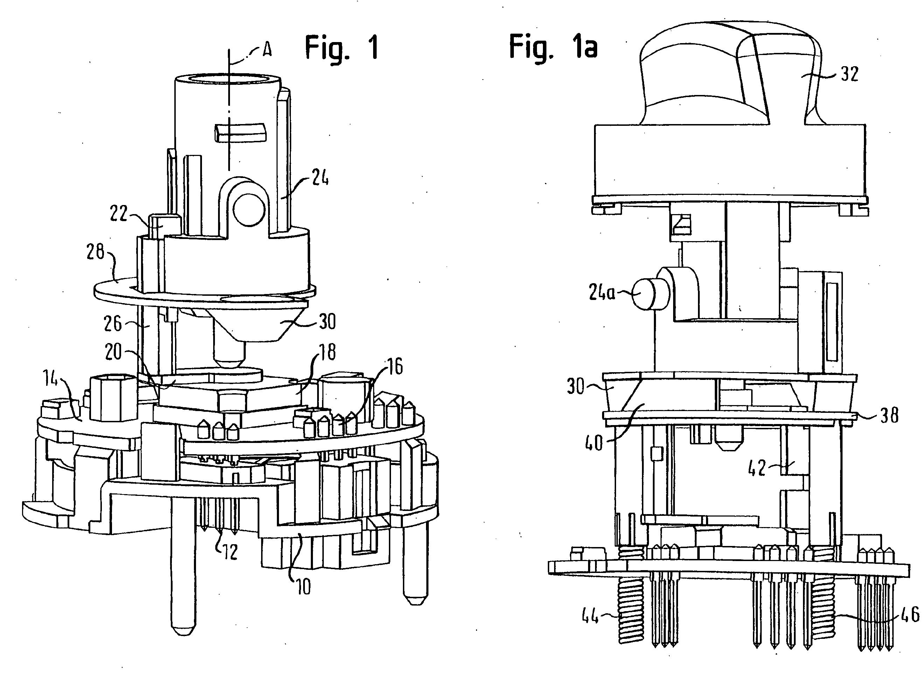

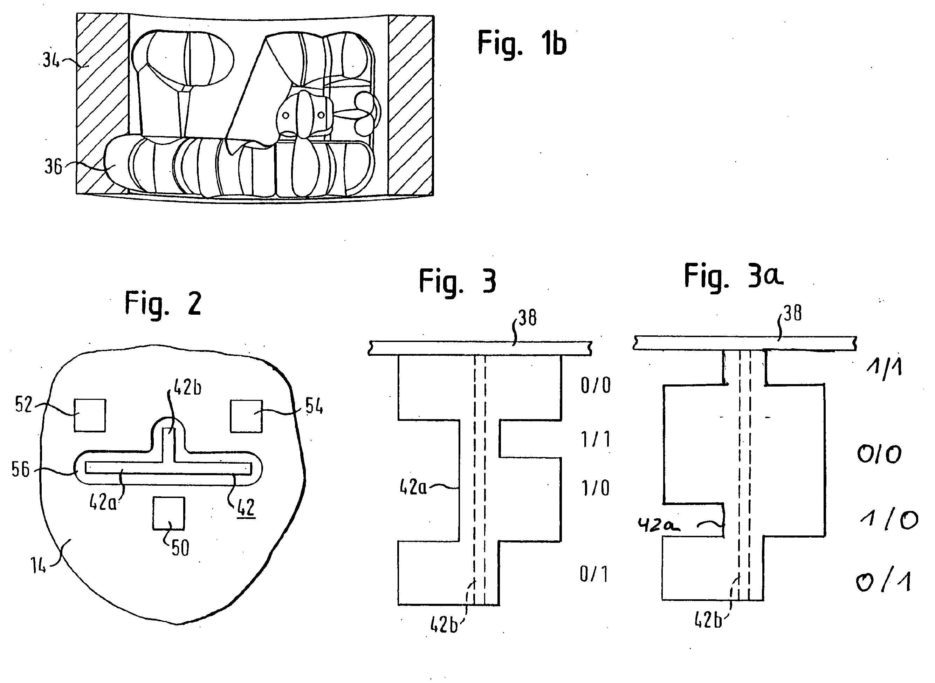

In Fig. 1 ist mit 10 eine Grundplatte bezeichnet, die auf ihrer Außenseite Steckverbinder 12 aufweist und auf ihrer Innenseite eine Leiterplatte 14 trägt. Die Leiterplatte 14 ist mit der Grundplatte 10 mechanisch verbunden und weist Kontaktstifte 16 auf. In ihrer Mitte trägt die Leierplatte 14 ein Drehpotentiometer 18. Das Drehpotentiometer 18 hat einen Betätigungsarm 20, der an seinem freien Ende einen rinnenförmigen Betätiger 26 trägt. Eine Schaltwelle 24 ist um eine Drehachse A des Lichtdrehschalters drehbar und zugleich entlang dieser Achse A axial verschiebbar. Die Schaltwelle 24 trägt einen axial gestreckten Betätigungsfinger 22, in den der rinnenförmigen Betätiger 26 axial verschiebbar, aber drehfest eingreift. Ferner trägt die Schaltwelle 24 einen radialen Anschlagring 28 mit einem zur Grundplatte 10 gerichteten Rampenkörper 30. Die in Fig. 1 gezeigten Funktionselemente sind in einem (nicht gezeigten) topfartigen Gehäuse aufgenommen.

Die Schaltwelle 24 ist mit einem in Fig. 1a gezeigten Drehknopf 32 drehfest und axial fest gekoppelt und trägt einen radial abstehenden, federbelasteten Raststift 24a. Eine mit dem (nicht gezeigten) Gehäuse verbundene Führungshülse 34 umgibt die Schaltwelle 24 auf der Höhe des Raststiftes 24a und ist mit internen Rastkurven 36 versehen, in denen der Raststift 24a läuft. Die Rastkurven 36 definieren die verschiedenen Drehstellungen und Axialstellungen des Drehknopfes 32 und der Schaltwelle 24.

In Fig. 1a ebenfalls gezeigt ist ein in Fig. 1 zur Vereinfachung fortgelassener ringförmiger Träger 38 mit einem Rampenkörper 40, der komplementär zu dem Rampenkörper 30 ist. An dem in einer Radialebene gelegenen Ringkörper des Trägers 38 ist ein sich in Axialrichtung und in Richtung der Grundplatte 10 erstreckender Lichtschrankenunterbrecher 42 befestigt. Der Träger 38 ist mit dem Rampenkörper 40 und dem Lichtschrankenunterbrecher 42 axial frei beweglich geführt und wird durch Druckfedern 44, 46, die sich an der Grundplatte 10 abstützen, gegen den Anschlagring 28 gedrückt, so dass er dessen Axialposition nachgeführt wird. Somit wird auch der Lichtschrankenunterbrecher 42 der Axialposition der Schaltwelle 24 nachgeführt.

Auf der Leiterplatte 14 ist ein Lichtschrankensystem aufgebaut. Es besteht aus einem Lichtsender 50, zwei Lichtempfängern 52, 54 und aus dem Lichtschrankenunterbrecher 42. Lichtsender 50 und Lichtempfänger 52, 54 sind an den Ecken eines Dreiecks angeordnet. Der Lichtschrankenunterbrecher 42 durchquert eine Öffnung 56 der Leiterplatte 14 und erstreckt sich mit einem Hauptflügel 42a generell zwischen dem Lichtsender 50 einerseits und den Lichtempfängern 52, 54 andererseits sowie mit einem Schirmflügel 42b zwischen den Lichtempfängern 52, 54. Der Hauptflügel 42a trägt eine Codierung in Form von beiderseits des Schirmflügels angeordneten Sperrflügeln und Durchlassfenstern. Einem Durchlassfenster ist der Signalwert "1" (Licht zum Lichtempfänger durchgelassen) und einem Sperrflügel der Signalwert "0" (Lichtweg zum Lichtempfänger unterbrochen) zugeordnet. Bei der in Fig 3 dargestellten Ausführungsform verkörpert somit der Lichtschrankenunterbrecher 42 die in Axialrichtung voneinander beabstandeten Signalwertpaare "0/0", "1/1", "1/0" und ""0/1". Jedes dieser vier Signalwertpaare entspricht einer der vier möglichen Axialpositionen des Trägers 38 und des Lichtunterbrechers 42. Eine alternative Anordnung der Durchlassfenster ist in Fig. 3a gezeigt.

Die Drehbewegung der Schaltwelle 24 wird über den Betätigungsfinger 22, den Betätiger 26 und den Betätigungsarm 20 auf den Schleifer des Drehpotentiometers 18 übertragen. Eine am Schleifer des Drehpotentiometers 18 abgegriffene Spannung ist daher ein Maß für den Drehwinkel der Schaltwelle. Folglich bildet das Drehpotentiometer einen Drehstellungsmelder für den Lichtdrehschalter.

Der Träger 38 mit dem Lichtschrankenunterbrecher 42 folgt der Axialbewegung der Schaltwelle 24. Die Schaltwelle 24 hat neben ihrer tiefsten Axialstellung eine erste und eine zweite "gezogene" Stellung. Der Träger 38 mit dem Lichtschrankenunterbrecher 42 kann eine weitere Axialstellung annehmen, indem die Rampenflächen der Rampenkörper 30 und 40 aufeinander gleiten, so dass der Träger 38 durch die Druckfedern 44, 46 gegen den Anschlagring 28 gedrückt wird. Das Lichtschrankensystem liefert für jede der vier möglichen Axialstellungen des Lichtschrankenunterbrechers 42 eines der Signalwertpaare "0/0", "1/1", "1/0" und ""0/1". Somit bildet das Lichtschrankensystem einen Axialpositionsmelder für den Lichtdrehschalter.

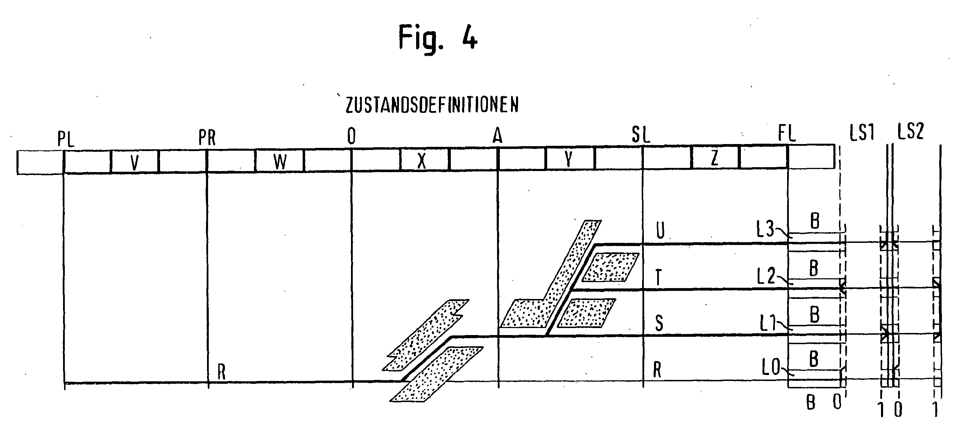

Bei dem in Fig. 4 gezeigten Ausführungsbeispiel ist der Drehwinkelbereich des Drehpotentiometers 18 bzw. der Schaltwelle 24 in sechs diskrete Drehstellungen unterteilt, die jeweils durch undefmierte Winkelbereiche getrennt sind. Zwischen 0° und 96° folgen nacheinander die Drehstellungen PL (Parklicht Links), PR (Parklicht Rechts), 0 (Aus), A (Automatik), SL (Standlicht) und FL (Fernlicht, jeweils getrennt durch einen der undefinierten Winkelbereiche V, W, X, Y und Z. Fig. 4 zeigt - ebenfalls beispielshalber - auch die vier möglichen Axialpositionen des Lichtschrankenunterbrechers 42 und die entsprechenden Zustände des aus zwei Lichtschranken LS1 und LS2 bestehenden Lichtschrankensystems in Relation zu den Drehstellungen der Schaltwelle 24. In den Drehstellungen PL, PR und 0 nimmt die Schaltwelle 24 die tiefste Axialposition R ein. Die Lichtschranken LS1 und LS2 liefern das Signalwertpaar "0/0". Beim Übergang von Drehstellung 0 zu Drehstellung A laufen die Rampenflächen der Rampenkörper 30, 40 aufeinander, wodurch der Lichtschrankenunterbrecher 42 in die Axialposition S überführt wird. Die Lichtschranken LS1 und LS2 liefern das Signalwertpaar "1/1". Ab der Drehstellung A erlaubt die Rastkurve 36 das Ziehen der Schaltwelle 24 mittels des Drehknopfes 32 in zwei "gezogene" Axialstellungen T (Nebellicht) und U (Nebelschlusslicht). Die Lichtschranken LS1 und LS2 liefern in der Axialstellung T das Signalwertpaar "1/0" und in der Axialstellung U das Signalwertpaar "1/1 ". In Fig. 4 sind die vier definierten Zustände des Lichtschrankensystems entsprechend den diskreten Axialpositionen R, S, T und U des Lichtschrankenunterbrechers 42 mit L0 bis L3 bezeichnet; die Übergangsbereiche zwischen je zwei der Zustände L0 bis L3 sind undefiniert und mit "B" bezeichnet.

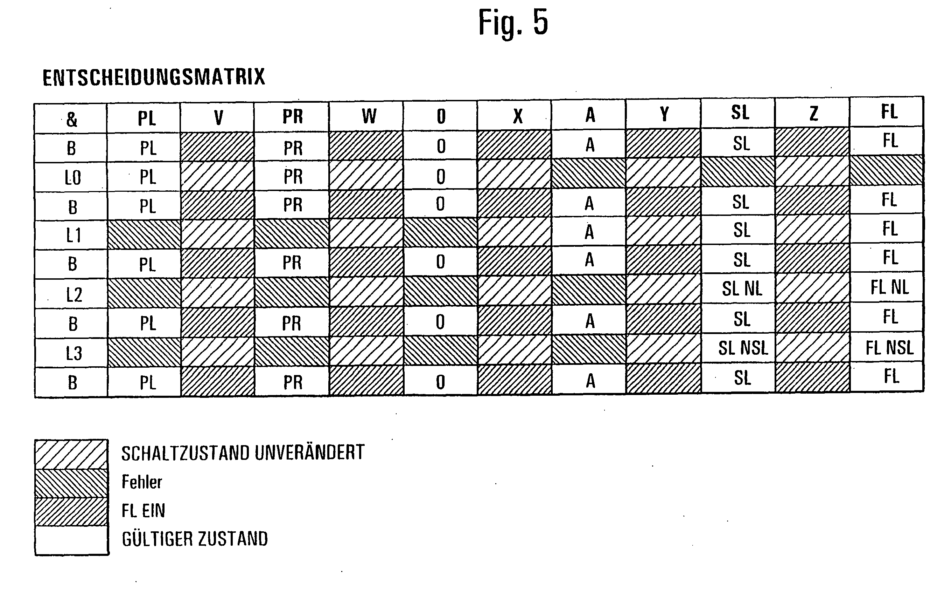

In Fig. 5 sind die Drehstellungen PL bis FL in Relation zu den Zuständen L0 bis L3 unter Berücksichtigung der Übergangsbereiche V bis Z (Drehwinkel) sowie B (Axialposition) als Entscheidungsmatrix dargestellt. In der Entscheidungsmatrix wird jeder Kombination von Drehstellung und Axialposition eines der folgenden Felder zugewiesen:
- Verbleiben im aktuellen Zustand
- Fehler
- Fernlicht einschalten (Default)
- Gültige Schalterstellung.

Der Entscheidungsprozess kann mit geeigneter Software in einem Microcontroller durchgeführt werden.

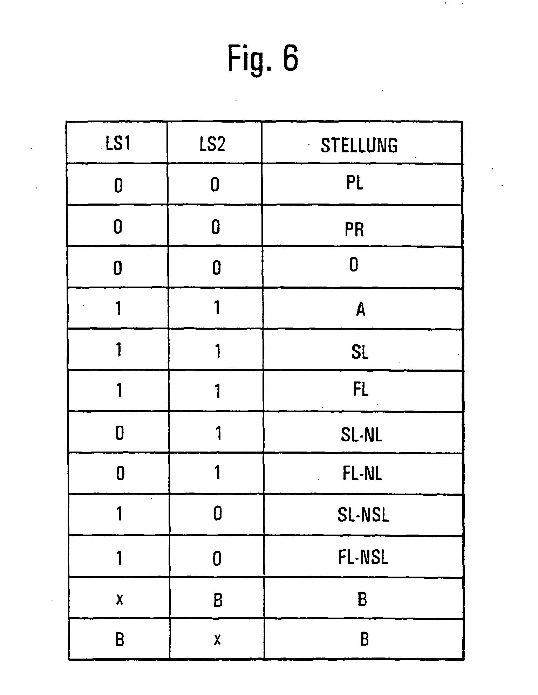

In Fig. 6 sind die Dreh/Axial-Stellungen des Lichtdrehschalters in Relation zu den Zuständen der Lichtschranken LS1 und LS2 Tabellarisch Zusammengefasst.

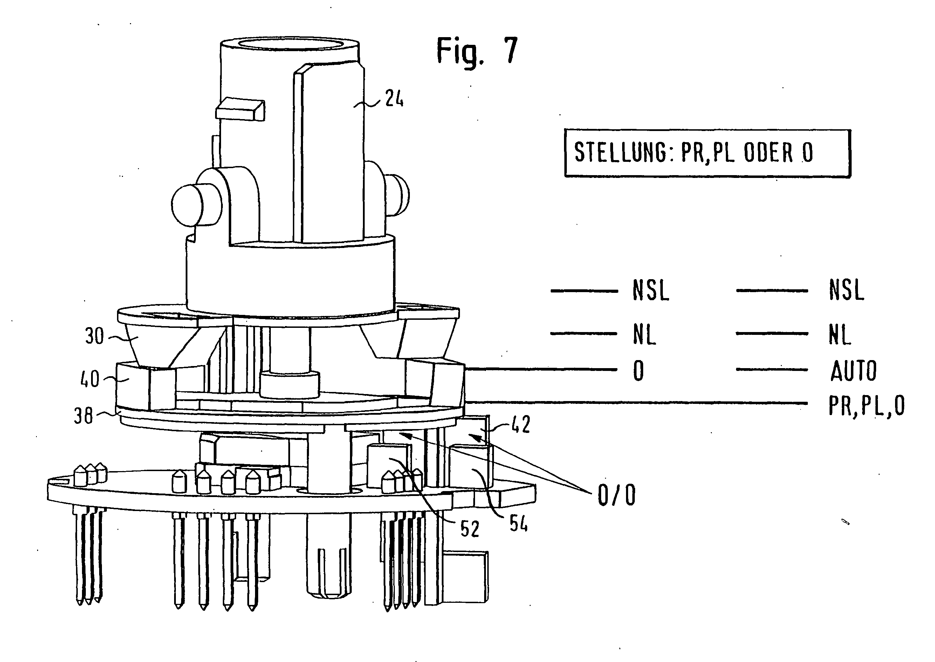

Fig. 7 zeigt die Schaltwelle 24 und den Lichtschrankenunterbrecher 42 in der tiefsten Axialposition, in der die Schalterstellungen PR, PL und 0 erreicht werden. Die Rampenkörper 30, 40 liegen in diesem Zustand axial aufeinander. Das Lichtschrankensystem liefert das Signalwertpaar "0/0".

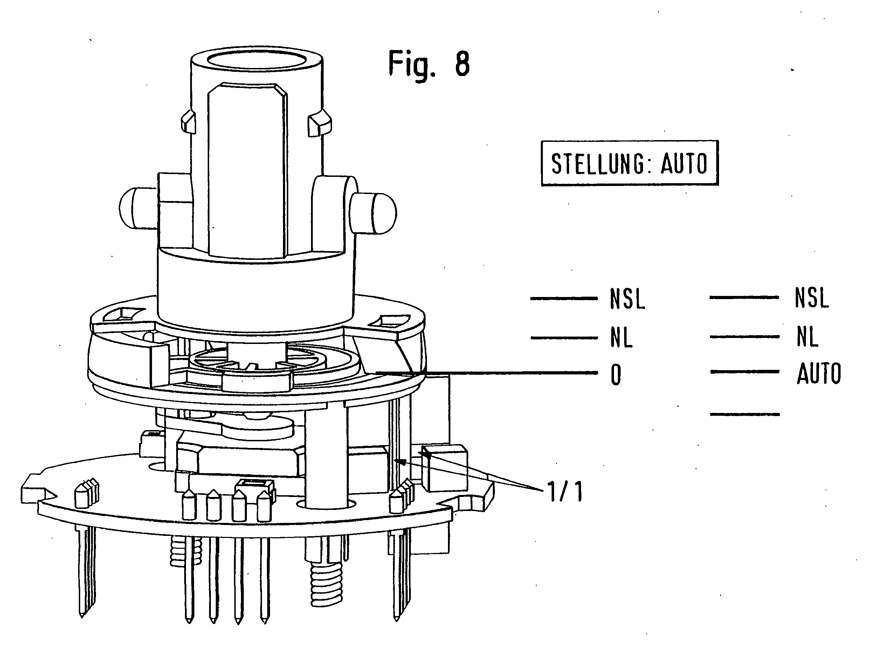

In Fig. 8 liegen die Rampenkörper 30, 40 auf gleicher axialer Höhe, nachdem ihre Rampenflächen aufeinander geglitten sind und der Träger 38 mit dem Lichtschrankenunterbrecher 42 durch die Druckfedern 44, 46 gegen den Anschlagring 28 axial verlagert wurde. Das Lichtschrankensystem liefert das Signalwertpaar "1/1". In diesem Zustand werden die Schalterstellungen A, SL und FL erreicht.

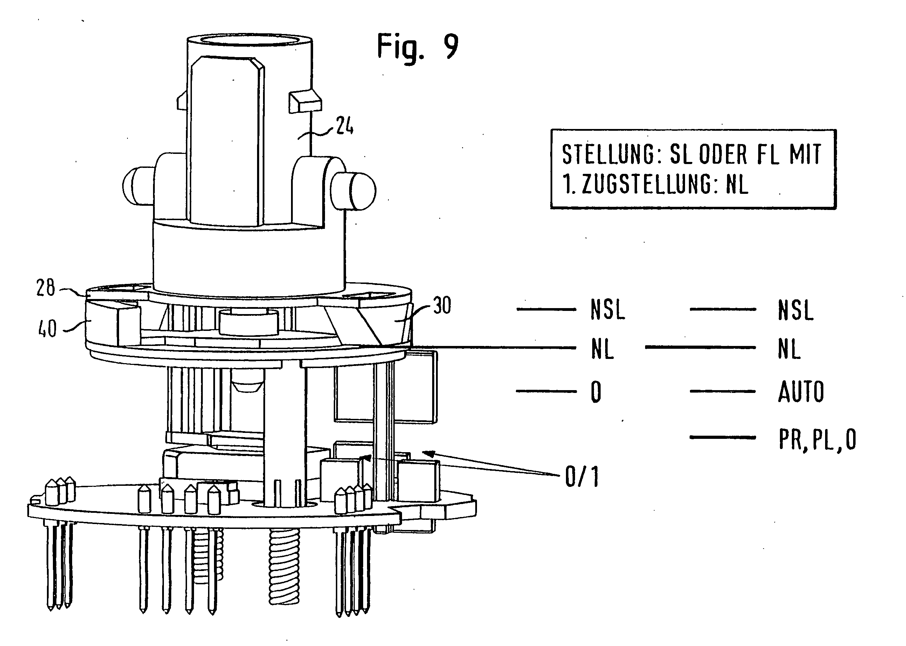

Fig. 9 zeigt die "erste Zugstellung". Die Schaltwelle 24 ist aus ihrer tiefste Axialposition um einige Millimeter heraus gezogen. Der Träger 38 mit dem Lichtschrankenunterbrecher 42 ist dieser Axialbewegung gefolgt. Das Lichtschrankensystem liefert das Signalwertpaar "0/1 ". In diesem Zustand werden die Schalterstellungen SL mit NL oder FL mit NL erreicht.

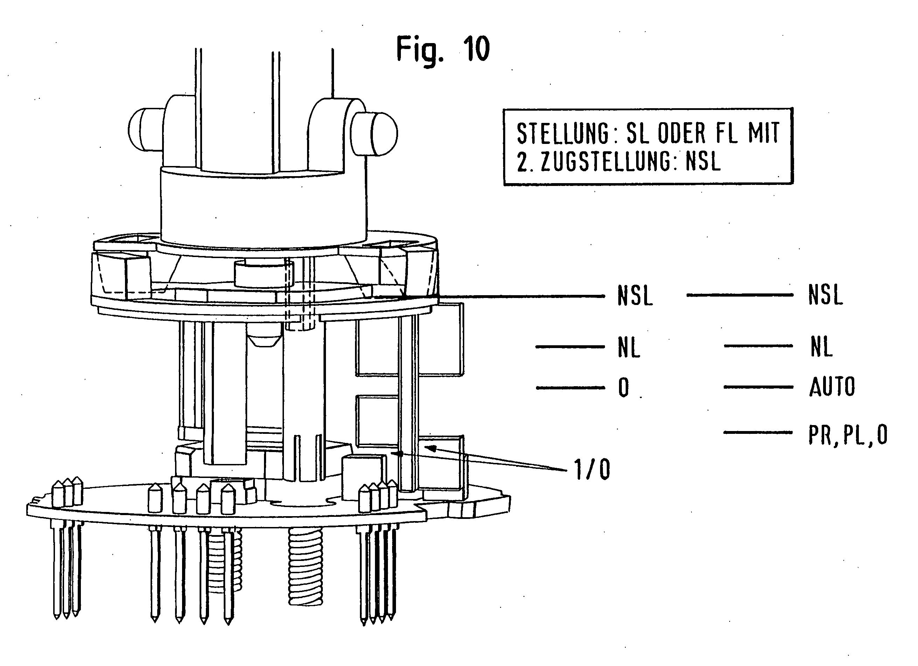

Fig. 10 zeigt die "zweite Zugstellung". Die Schaltwelle 24 ist aus ihrer ersten Zugstellung um einige weitere Millimeter heraus gezogen. Der Träger 38 mit dem Lichtschrankenunterbrecher 42 ist dieser Axialbewegung wiederum gefolgt. Das Lichtschrankensystem liefert das Signalwertpaar "1/0". In diesem Zustand werden die Schalterstellungen SL mit NSL oder FL mit NSL erreicht.

Es versteht sich, dass andere Ausführungen von Lichtschaltern unter Anwendung der beschriebenen Prinzipien verwirklicht werden können. Wesentlich ist die Redundanz der vom Drehstellungsmelder einerseits und vom Axialpositionsmelder andererseits gelieferten Information zur Gewährleistung von eindeutig definierten Schalterzuständen und zur Vermeidung von fehlerhaften Schalterzuständen.

## Patentansprüche

1. Lichtdrehschalter für Kraftfahrzeuge, mit einer um eine Achse (A) drehbaren und axial verschiebbaren Schaltwelle (24), die drehfest mit einem Drehstellungsmelder sowie axial mit einem Axialpositionsmelder gekoppelt ist, und mit einer elektronischen Auswerteschaltung, der die Signale vom Drehstellungsmelder und vom Axialpositionsmelder zugeführt werden und die nach einer fest eingespeicherten Entscheidungsmatrix aus den Signalen diskrete Schalterzustände ableitet, die in Schaltsignale zur Ansteuerung der Beleuchtungsanlage des Kraftfahrzeugs umgesetzt werden, **dadurch gekennzeichnet, dass** der Drehstellungsmelder ein an die Schaltwelle (24) angekoppeltes Potentiometer (18) umfasst und dass der Axialpositionsmelder ein an die Schaltwelle (24) angekoppeltes Lichtschrankensystem (42, 50, 52, 54) umfasst.

2. Lichtdrehschalter nach Anspruch 1, bei dem bestimmte Kombinationen von Signalen des Drehstellungsmelders und des Axialpositionsmelders in der Entscheidungsmatrix als Fehler markiert sind.

3. Lichtdrehschalter nach Anspruch 1 oder 2, bei dem bestimmte Kombinationen von Signalen des Drehstellungsmeiders und des Axialpositionsmelders in der Entscheidungsmatrix als Default-Schalterzustand markiert sind.

4. Lichtdrehschalter nach einem der Ansprüche 1 bis 3, bei dem bestimmte Kombinationen von Signalen des Drehstellungsmelders und des Axialpositionsmelders in der Entscheidungsmatrix als unveränderter Schalterzustand markiert sind.

5. Lichtdrehschalter nach einem der Ansprüche 1 bis 4, bei dem bestimmte Signalbereiche des Drehstellungsmelders in der Entscheidungsmatrix als undefinierte Winkelbereiche markiert sind.

6. Lichtdrehschalter nach einem der Ansprüche 1 bis 5, bei dem bestimmte Signalbereiche des Axialpositionsmelders in der Entscheidungsmatrix als undefinierte übergangsbereiche markiert sind.

7. Lichtdrehschalter nach einem der vorstehenden Ansprüche, bei dem das Lichtschrankensystem zwei Lichtschranken (50, 52, 54) und einen codierten Lichtschrankenunterbrecher (42) umfasst.

8. Lichtdrehschalter nach Anspruch 7, bei dem der Lichtschrankenunterbrecher (42) an einem axial beweglichen, drehfest gehaltenen Träger (38) befestigt ist, der durch vorgespannte Federn (44, 46) der Axialbewegung der Schaltwelle (24) nachgeführt ist.

9. Lichtdrehschalter nach Anspruch 8, bei dem die Schaltwelle (24) eine axial ansteigende Rampe (30) aufweist, die sich in Umfangsrichtung zwischen zwei Drehstellungen der Schaltwelle (24) erstreckt, und der Träger (38) eine zur Rampe (30) komplementäre Gegenrampe (40) aufweist.

10. Lichtdrehschalter nach Anspruch 9, bei dem die Rampe (30) und die Gegenrampe (40) jeweils zwei in Umfangsrichtung beabstandete, axial gegeneinander versetzte und in verschiedenen Radialebenen gelegene Anschlagflächen verbinden.

## Claims

1. A rotary light switch for motor vehicles, comprising an actuation shaft (24) that is rotatable about an axis (A) and axially displaceable, and that is coupled for joint rotation to a rotational position indicator and axially coupled to an axial position indicator, and comprising an electronic evaluation circuit to which the signals from the rotational position indicator and from the axial position indicator are fed and which, according to a permanently stored decision matrix, derives discrete switch states from the signals, the switch states being converted into switching signals used to actuate the lighting system of the motor vehicle, **characterized in that** the rotational position indicator comprises a potentiometer (18) coupled to the actuation shaft (24) and that the axial position indicator comprises a light barrier system (42, 50, 52, 54) coupled to the actuation shaft (24).

2. The rotary light switch according to claim 1, in which predetermined combinations of signals of the rotational position indicator and of the axial position indicator are marked in the decision matrix as errors.

3. The rotary light switch according to claim 1 or 2, in which predetermined combinations of signals of the rotational position indicator and of the axial position indicator are marked in the decision matrix as a default switch state.

4. The rotary light switch according to any of claims 1 to 3, in which predetermined combinations of signals of the rotational position indicator and of the axial position indicator are marked in the decision matrix as an unchanged switch state.

5. The rotary light switch according to any of claims 1 to 4, in which predetermined signal ranges of the rotational position indicator are marked in the decision matrix as undefined angular ranges.

6. The rotary light switch according to any of claims 1 to 5, in which predetermined signal ranges of the axial position indicator are marked in the decision matrix as undefined transition areas.

7. The rotary light switch according to any of the preceding claims, in which the light barrier system comprises two light barriers (50, 52, 54) and an encoded light barrier interrupter (42).

8. The rotary light switch according to claim 7, in which the light barrier interrupter (42) is fastened to an axially movable, non-rotatably maintained support (38) that is caused by pre-tensioned springs (44, 46) to follow the axial movement of the actuation shaft (24).

9. The rotary light switch according to claim 8, in which the actuation shaft (24) has an axially rising ramp (30) that extends in the circumferential direction between two rotational positions of the actuation shaft (24), and the support (38) has a counter-ramp (40) that is complementary to the ramp (30).

10. The rotary light switch according to claim 9, in which the ramp (30) and the counter-ramp (40) each connect two stop surfaces that are spaced from each other in the circumferential direction, axially offset with respect to each other and located in different radial planes.

## Revendications

1. Commutateur rotatif d'éclairage pour véhicules, comportant un arbre de commande (24) rotatif autour d'un axe (A) et déplaçable axialement, qui est accouplé de manière solidaire en rotation avec un indicateur de position de rotation ainsi qu'axialement avec un indicateur de position axiale, et comportant un circuit d'évaluation électronique auquel sont amenés les signaux provenant de l'indicateur de position de rotation et de l'indicateur de position axiale et qui, selon une matrice de décisions mémorisée en permanence, dérive à partir des signaux des états de commutateur discrets qui sont transformés en signaux de commutation pour piloter l'installation d'éclairage du véhicule automobile, **caractérisé en ce que** l'indicateur de position de rotation comprend un potentiomètre (18) accouplé à l'arbre de commande (24) et **en ce que** l'indicateur de position axiale comprend un système de barrière lumineuse (42, 50, 52, 54) accouplé à l'arbre de commande (24).

2. Commutateur rotatif d'éclairage selon la revendication 1, dans lequel des combinaisons déterminées de signaux de l'indicateur de position de rotation et de l'indicateur de position axiale sont marquées dans la matrice de décisions en tant qu'erreurs.

3. Commutateur rotatif d'éclairage selon la revendication 1 ou 2, dans lequel des combinaisons déterminées de signaux de l'indicateur de position de rotation et de l'indicateur de position axiale sont marquées dans la matrice de décisions en tant qu'état de commutateur par défaut.

4. Commutateur rotatif d'éclairage selon l'une des revendications 1 à 3, dans lequel des combinaisons déterminées de signaux de l'indicateur de position de rotation et de l'indicateur de position axiale sont marquées dans la matrice de décisions en tant qu'état de commutateur inchangé.

5. Commutateur rotatif d'éclairage selon l'une des revendications 1 à 4, dans lequel des plages de signaux de l'indicateur de position de rotation sont marquées dans la matrice de décisions en tant que plages angulaires indéfinies.

6. Commutateur rotatif d'éclairage selon l'une des revendications 1 à 5, dans lequel des plages de signaux de l'indicateur de position axiale sont marquées dans la matrice de décisions en tant que zones de transition indéfinies.

7. Commutateur rotatif d'éclairage selon l'une des revendications précédentes, dans lequel le système de barrière lumineuse comprend deux barrières lumineuses (50, 52, 54) et un interrupteur de barrière lumineuse (42) codé.

8. Commutateur rotatif d'éclairage selon la revendication 7, dans lequel l'interrupteur de barrière lumineuse (42) est fixé sur un support (38) mobile axialement et maintenu solidaire en rotation, qui est asservi par des ressorts (44, 46) précontraints au mouvement axial de l'arbre de commande (24).

9. Commutateur rotatif d'éclairage selon la revendication 8, dans lequel l'arbre de commande (24) présente une rampe (30) montante axialement qui s'étend en direction périphérique entre deux positions de rotation de l'arbre de commande (24), et le support (38) présente une rampe antagoniste (40) complémentaire à la rampe (30).

10. Commutateur rotatif d'éclairage selon la revendication 9, dans lequel la rampe (30) et la rampe antagoniste (40) relient chacune deux surfaces de butée espacées en direction périphérique, décalées axialement l'une par rapport à l'autre et situées dans différents plans radiaux.
